# EUROPÄISCHE PATENTSCHRIFT

(11) **EP 0 905 008 B1**
(45) Veröffentlichungstag und Bekanntmachung des Hinweises auf die Patenterteilung: **17.07.2002**
(21) Anmeldenummer: 98118080.5
(22) Anmeldetag: 24.09.1998
(51) Int. Cl.: B62D 21/07

(54) **Trägerfahrzeug**
Carrier vehicle
Véhicule porteur

(30) Priorität: 29.09.1997 DE 19743039
(43) Veröffentlichungstag der Anmeldung: 31.03.1999
(73) Patentinhaber: HORSCH GmbH & Co KG, 92421 Schwandorf (DE)
(72) Erfinder: Horsch, Michael, 92421 Schwandorf (DE)
(74) Vertreter: Dendorfer, Claus, Dr.

(56) Entgegenhaltungen:
- CH-A- 342 094
- DE-C- 767 645
- US-A- 2 108 279

## Beschreibung

Die Erfindung betrifft ein Trägerfahrzeug nach dem Oberbegriff des Anspruchs 1. Insbesondere betrifft die Erfindung ein Trägerfahrzeug für landwirtschaftliche Zwecke, und zwar bevorzugt ein solches, das für bodenschonende landwirtschaftliche Verfahren ausgelegt ist.

Bei solchen bodenschonenden Verfahren wird der auf den überfahrenen Boden ausgeübte Druck und damit die Verdichtung des Bodens gering gehalten, indem die überfahrene Fläche möglichst gleichmäßig belastet wird. Zu diesem Zweck werden breite, bodenschonende Reifen und der sogenannte "Hundegang" eingesetzt. Beim Hundegang weisen alle Räder des Fahrzeugs den gleichen Lenkwinkel auf, so daß sich das Fahrzeug zwar geradlinig bewegt, die Fahrzeuglängsachse aber einen Winkel zur Fahrtrichtung einnimmt. Dieser Winkel und die Reifenbreite sind so gewählt, daß die von den Vorder- und Hinterrädern gezogenen Spuren sich einerseits nicht überlappen und andererseits die überfahrene Fläche möglichst vollständig überdecken.

Die deutsche Patentschrift 767 645 offenbart ein Fahrgestell, das die nicht-fakultativen Merkmale des Oberbegriffs von Anspruch 1 aufweist, aber nicht für ein landwirtschaftliches Fahrzeug, sondern für einen Lastkraftwagen vorgesehen ist. Dieses Fahrgestell ist aus zwei kurvenförmig gekrümmten Längsträgern gebildet, die sich an zwei Punkten bei der Vorder- bzw. der Hinterachse kreuzen. Nach den Kreuzungspunkten, aber immer noch im Bereich der Vorder- bzw. Hinterräder, streben die Längsträger rasch auseinander, um eine hinreichende Verwindungssteifigkeit des Rahmens zu erreichen.

Die WO 93/16908 zeigt ein Fahrgestell eines Lastkraftwagens mit einer zwischen der Vorder- und der Hinterachse angeordneten Getriebeeinheit und einer überwiegend vor der Vorderachse angeordneten Fahrerkabine.

Unter dem Handelsnamen "Holmer Terra Variant" ist ein landwirtschaftliches Fahrzeug bekannt, bei dem eine Verbrennungsmotoreinheit ungefähr mittig über den Vorderrädern angeordnet ist. Eine Fahrerkabine schließt nach vorne an die Verbrennungsmotoreinheit an. Eine von dem Fahrzeug getragene Nutzlast erstreckt sich ungefähr von dem hinteren Abschluß der Vorderräder bis zu dem hinteren Abschluß der Hinterräder.

Das Gewicht der Nutzlast verteilt sich bei dem genannten Fahrzeug ungleichmäßig auf die Vorder- und Hinterachse. Eine schwere Nutzlast führt zu einer höheren Belastung der Hinterräder und damit zu einer höheren Bodenpressung. Die voluminöse Verbrennungsmotoreinheit verkürzt außerdem die Länge der zur Verfügung stehenden Lade- und Aufbaufläche, führt zu einer hohen Schwerpunktslage des unbeladenen Fahrzeugs und schränkt die Übersichtlichkeit vom Fahrerplatz aus ein.

Die Erfindung hat demgemäß die Aufgabe, die genannten Probleme zu vermeiden und ein Trägerfahrzeug bereitzustellen, das gerade auch im schwer beladenen Zustand eine möglichst gleichmäßige Lastverteilung auf die Vorder- und Hinterräder aufweist, um die Verdichtung des überfahrenen Bodens möglichst gering zu halten. Ferner soll das Trägerfahrzeug eine günstige Schwerpunktslage und eine gute Handhabbarkeit für den Fahrer aufweisen.

Erfindungsgemäß wird diese Aufgabe durch ein Trägerfahrzeug mit den Merkmalen des Anspruchs 1 gelöst. Mit dem Begriff "Trägerfahrzeug" soll hier ausgedrückt werden, daß das Fahrzeug zumindest auch zum Tragen von Lasten geeignet ist. Dies schließt einen Einsatz des Fahrzeuges als Zugmaschine nicht aus.

Die Erfindung schlägt eine besonders vorteilhafte Anordnung der Rahmen- und Antriebskomponenten des Fahrzeugs vor. Insbesondere ist vorgesehen, die das Trägerfahrzeug antreibende Verbrennungsmotoreinheit zumindest überwiegend vor den Vorderrädern anzuordnen und eine Getriebeeinheit zwischen der Vorder- und der Hinterachse anzubringen. Diese Aufteilung ist überraschend, weil man normalerweise die Getriebeeinheit räumlich entweder bei der Verbrennungsmotoreinheit oder bei einer der angetriebenen Achsen anordnen würde.

Durch die erfindungsgemäße Verteilung der Baugruppen ist das Fahrzeug in unbeladenem Zustand verkehrssicher, weil der Schwerpunkt niedrig und deutlich zwischen den Achsen liegt. Im beladenen Zustand kann die Last im wesentlichen symmetrisch über der Vorder- und Hinterachse oder leicht nach hinten versetzt angeordnet werden. Da im Regelfall das Gewicht der Last im Vergleich zu dem Gewicht der Verbrennungsmotoreinheit groß ist, gewährleistet diese Anordnung eine gleichmäßige Bodenpressung durch die Vorder- und Hinterräder.

Der Fahrer, dessen (offene oder geschlossene) Kabine erfindungsgemäß über der Verbrennungsmotoreinheit angeordnet ist, hat durch seine hohe Sitzposition eine gute Sicht.

In bevorzugten Ausführungsformen schließt der hinterste Punkt der Verbrennungsmotoreinheit, insbesondere ein Schwungradgehäuse, vor dem vordersten Punkt der Vorderräder ab oder ist ungefähr gleichauf damit angeordnet. Bevorzugt ist höchstens ein kurzer Abstand zwischen den Vorderrädern und der Verbrennungsmotoreinheit vorgesehen, damit das Fahrzeug im unbeladenen Zustand nicht kopflastig ist. Die Getriebeeinheit ist vorzugsweise vor dem vordersten Punkt der Hinterräder und hinter dem hintersten Punkt der Vorderräder und insbesondere ungefähr zentral an dem Rahmen des Fahrzeugs angeordnet.

Bevorzugt weisen die Vorder- und/oder Hinterräder bodenschonende Breitreifen auf. Dies können insbesondere solche Reifen sein, deren Breite mindestens 20 % und vorzugsweise mindestens 30 % der Breite des Trägerfahrzeugs beträgt. Das Trägerfahrzeug ist bei Geradeausfahrt vorzugsweise nicht breiter als 3,5 m oder nicht breiter als 3,0 m. Damit weisen in bevorzugten Ausführungsformen die Reifen der Vorder- und/oder Hinterräder eine Breite von 0,8 m bis 1,2 m und/oder einen Durchmesser von 1,5 m bis 2,0 m auf. Der Abstand zwischen den beiden Rädern einer Achse ist vorzugsweise ungefähr gleich oder etwas kleiner als die Breite eines Rades, um eine gleichmäßige Bodenüberdeckung im Hundegang zu erreichen. Ferner haben vorzugsweise alle Reifen des Fahrzeugs im wesentlichen die gleichen Abmessungen.

Der Rahmen ist in vorteilhaften Weiterbildungen der Erfindung als Hohlprofilrahmen ausgestaltet. Im Bereich der Vorder- und der Hinterachse beziehungsweise der Vorder- und der Hinterräder kann der Rahmen auf eine Breite zusammengezogen sein, die kleiner als die Breite eines Vorder- oder Hinterrades ist und vorzugsweise weniger als 0,6 m beträgt.

In weiteren vorteilhaften Ausgestaltungen weist das Fahrzeug einen hydrostatischen Antrieb auf. Ein Hydraulikmotor dieses Antriebs kann anstatt der Getriebeeinheit oder zusätzlich zu der Getriebeeinheit vorgesehen sein. Die zugehörige Hydraulikpumpe kann entweder an der Verbrennungsmotoreinheit oder an dem Hydraulikmotor angeordnet sein.

In bevorzugten Ausführungsformen der Erfindung ist am Rahmen ein Schnellwechselsystem zum Anbringen von Aufbauten und/oder eine Anhängevorrichtung vorgesehen. Ferner weist das Fahrzeug bevorzugt eine Vierradlenkung auf, die zumindest auch eine Hundegang-Betriebsweise bereitstellt.

Weitere bevorzugte Ausführungsformen sind Gegenstand der abhängigen Ansprüche.

Ein Ausführungsbeispiel der Erfindung und mehrere Ausführungsalternativen werden nun unter Hinweis auf die Zeichnungen beschrieben. Es zeigen:
Fig. 1 eine schematische Draufsicht auf Rahmen- und Antriebskomponenten eines erfindungsgemäßen Trägerfahrzeugs, und
Fig. 2 eine schematische Seitenansicht des Trägerfahrzeugs von Fig. 1.

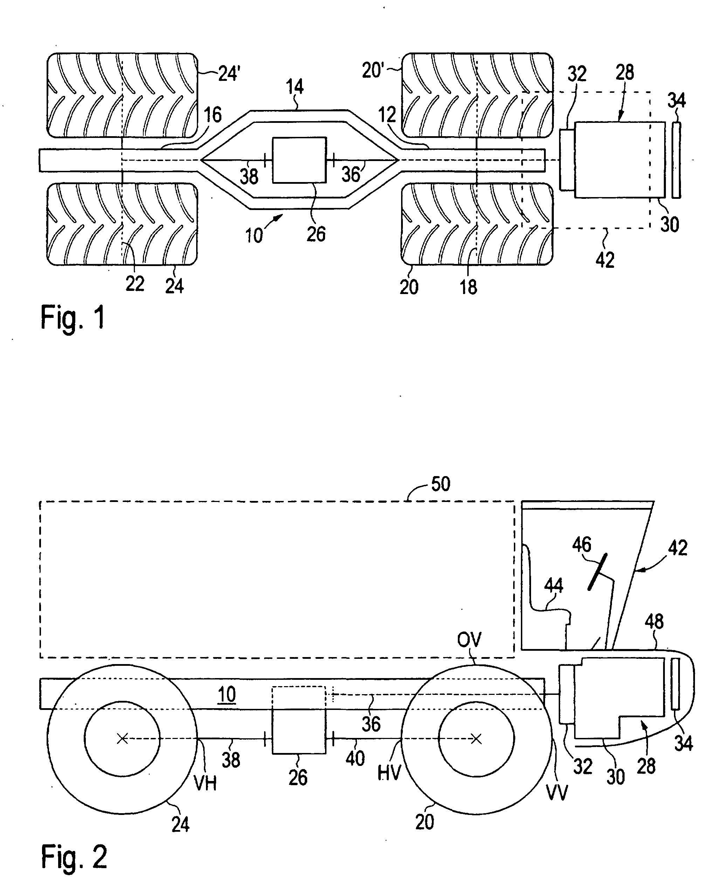

Das in Fig. 1 und Fig. 2 dargestellte Trägerfahrzeug dient für landwirtschaftliche Zwecke und ermöglicht eine bodenschonende Arbeitsweise. Wie in Fig. 1 gezeigt, weist das Fahrzeug einen zentralen, verwindungssteifen Rahmen 10 auf, der als Hohlprofilrahmen ausgestaltet ist. Der Rahmen 10 hat in Längsrichtung einen vorderen Abschnitt 12, einen Mittelabschnitt 14 und einen hinteren Abschnitt 16. Der vordere Abschnitt 12 und der hintere Abschnitt 16 sind wespentaillenartig zusammengezogen oder verjüngt, während der Mittelabschnitt 14 in zwei Rahmenstränge unterteilt ist, die in der Draufsicht ungefähr ein Sechseck bilden.

Eine Vorderachse 18 des Trägerfahrzeugs ist als Pendelachse ausgebildet und weist zwei Vorderräder 20, 20' auf, und an einer starren Hinterachse 22 sind zwei Hinterräder 24, 24' angebracht. Die Vorder- und Hinterräder 20, 20', 24, 24' weisen je einen bodenschonenden Breitreifen auf. In dem hier gezeigten Ausführungsbeispiel sind alle vier Reifen im wesentlichen gleich groß und haben einen Außendurchmesser von 1,7 m und eine Breite von 1,0 m. In Ausführungsalternativen können andere Reifenarten und -größen verwendet werden.

Eine Getriebeeinheit 26 ist alsmechanisches Schaltgetriebe ausgebildet und in dem Mittelabschnitt 14 des Rahmens 10 zwischen den beiden Rahmensträngen angeordnet. Die Getriebeeinheit 26 befindet sich ungefähr in der Mitte zwischen der Vorder- und der Hinterachse 18, 22 und ungefähr in der Mitte der Fahrzeugbreite.

Etwas vor dem vorderen Ende des Rahmens 10 ist eine Verbrennungsmotoreinheit 28 mit einem Dieselmotor 30, einem Schwungscheibengehäuse 32 und einem Kühler 34 ungefähr in der Mitte der Fahrzeugbreite angeordnet. Die Verbrennungsmotoreinheit 28 und die Getriebeeinheit 26 sind zumindest abschnittsweise breiter als der innere Abstand zwischen den Vorderrädern 20, 20'. Ein Abtrieb der Verbrennungsmotoreinheit 28 und ein Antrieb der Getriebeeinheit 26 sind durch eine Kardanwelle 36 miteinander verbunden. Bei dem hier beschriebenen Ausführungsbeispiel ist eine Kupplung in die Getriebeeinheit 26 integriert. In Ausführungsalternativen ist vorgesehen, die Kupplung an die Verbrennungsmotoreinheit 28 anzubauen, so daß durch ein Auskuppeln die Verbindung zwischen der Kardanwelle 36 und der Verbrennungsmotoreinheit 28 gelöst wird.

Die Getriebeeinheit 26 treibt ihrerseits die Hinterräder 24, 24' über eine hintere Antriebswelle 38 an, die von einem hinteren Abtrieb der Getriebeeinheit 26 zu einem Hinterachsgetriebe verläuft. Entsprechend ist eine vordere Antriebswelle 40 (in Fig. 2 gezeigt) zum Antreiben der Vorderräder 20, 20' von der Getriebeeinheit 26 zu einem Vorderachsgetriebe vorgesehen.

In Fig. 1 ist ferner durch ein gestricheltes Rechteck die Position einer Fahrerkabine 42 angedeutet. Wie in Fig. 2 genauer dargestellt ist, sind in der Fahrerkabine 42 ein Fahrersitz 44 und mehrere Bedienelemente, unter anderem ein Lenkrad 46, angeordnet. Hinsichtlich ihrer Position entlang der Fahrzeuglängsachse befindet sich die Fahrerkabine 42 vor der Vorderachse 18 und zu einem überwiegenden Teil sogar vor dem in Fig. 2 mit VV bezeichneten vordersten Punkt der Vorderreifen 20, 20'. Hinsichtlich ihrer Höhe befindet sich die Fahrerkabine 42 über der Verbrennungsmotoreinheit 28 und sogar über dem in Fig. 2 mit OV bezeichneten obersten Punkt der Vorderreifen 20, 20'. Ferner sind die Fahrerkabine 42 und die Verbrennungsmotoreinheit 28 im Hinblick auf die Fahrzeuglängsachse ein wenig versetzt. Die Verbrennungsmotoreinheit 28 und eine Motorhaube 48, die die Verbrennungsmotoreinheit 28 umschließt, ragen unter der Fahrerkabine 42 nach vorne hervor.

Weiter zeigt Fig. 2 den hintersten Punkt HV der Vorderreifen 20, 20' und den vordersten Punkt VH der Hinterreifen 24, 24'. Die Getriebeeinheit 26 ist ungefähr in der Mitte zwischen diesen Punkten angeordnet. Der vordere und der hintere Abtrieb der Getriebeeinheit 26 befinden sich unter dem Rahmen 10 und etwa in Höhe der Vorder- und der Hinterachse 18, 22, so daß die vordere und die hintere Antriebswelle 38, 40 ungefähr waagerecht unter dem Rahmen 10 verlaufen. Der Antrieb der Getriebeeinheit 26 befindet sich etwa in Höhe des Rahmens 10, ebenso wie der Abtrieb der Verbrennungsmotoreinheit 28. Die Kardanwelle 36 verläuft daher ebenfalls waagerecht in Richtung der Fahrzeuglängsachse, und zwar durch den hohlen, vorderen Abschnitt 12 des Rahmens 10. Durch diese Anordnung wird eine geringe Bauhöhe des Fahrzeuggrundgestells erreicht.

In Fig. 2 ist ferner eine Last 50 durch ein gestricheltes Rechteck angedeutet. Die Last 50 kann ein landwirtschaftlicher Aufbau wie beispielsweise ein Miststreuer, ein Düngerstreuer, ein Güllefaß, eine Kippmulde oder ein ähnliches Gerät sein. Die Last 50 ist mittels eines Schnellwechselsystems am Rahmen 10 angebracht, so daß sie relativ leicht und in kurzer Zeit gewechselt werden kann. Wie in Fig. 2 gezeigt, ist das Gewicht der Last 50 ungefähr gleichmäßig auf die Vorder- und die Hinterachse 18, 22 verteilt. Genauer gesagt ist die Last 50 leicht nach hinten verschoben, weil das Gewicht der Verbrennungsmotoreinheit 28 den Gesamtschwerpunkt des Fahrzeugs gegenüber dem Schwerpunkt der Last 50 etwas nach vorne verschiebt.

Das in Fig. 1 und Fig. 2 dargestellte Ausführungsbeispiel des Trägerfahrzeugs weist eine hydraulische Vierradlenkung mit Lenkzylindern auf, wobei jeweils die beiden an einer Achse befindlichen Räder mit einer Spurstange verbunden sind und stets den gleichen Lenkwinkel einnehmen. Ein Lenkeinschlag des Lenkrads 46 beeinflußt unmittelbar nur den Lenkwinkel der Vorderräder 20, 20'. Die Hinterräder 24, 24' werden dagegen mittels einer elektronischen Lenksteuerung mitgelenkt. Dabei sind mehrere Betriebsweisen der Lenksteuerung möglich und vom Fahrer einstellbar.

Bei einer Allradlenkungs-Betriebsweise der Lenksteuerung werden die Hinterräder 24, 24' gegensinnig zu den Vorderrädern 20, 20' verschwenkt, um besonders enge Kurvenradien zu ermöglichen. Bei einer Vorderachslenkungs-Betriebsweise stehen die Hinterräder 24, 24' stets in Richtung der Fahrzeuglängsachse. Schließlich werden bei einer Hundegang-Betriebsweise die Hinterräder 24, 24' gleichsinnig mit den Vorderrädern 20, 20' verschwenkt. Wie eingangs geschildert, weist bei einer Geradeausfahrt im Hundegang die Fahrzeuglängsachse einen Winkel zur Bewegungsrichtung des Fahrzeugs auf. Dadurch läuft beispielsweise das Hinterrad 24 zwischen den von den Vorderrädern 20, 20' auf dem Boden gezogenen Spuren, und das Hinterrad 24' läuft auf einer Spur, die gegenüber der des Vorderrades 20' nach außen versetzt ist.

Am hinteren Abschnitt 16 des Rahmens 10, hinter der Hinterachse 22, ist bei dem hier beschriebenen Ausführungsbeispiel eine Dreipunktgestänge-Anhängevorrichtung angebracht, an die sich beispielsweise Bodenbearbeitungsgeräte anhängen lassen. Durch eine geeignete hydraulische Einrichtung ist das Dreipunktgestänge um eine senkrechte Achse schwenkbar, um auch bei einer Hundegangfahrt das Bodenbearbeitungsgerät in einem gewünschten Winkel (normalerweise 90°) zur Fahrtrichtung zu halten. Die Schwenkeinrichtung kann manuell oder von der elektronischen Lenksteuerung gesteuert werden.

In Ausführungsalternativen des in Fig. 1 und Fig. 2 gezeigten Fahrzeugs verläuft die Kardanwelle 36 nicht durch den vorderen Abschnitt 12 des Rahmens 10, sondern unter dem Rahmen 10. Um in diesen Ausführungsalternativen die Bauhöhe der Fahrwerksbaugruppe nicht zu groß werden zu lassen, kann zusätzlich vorgesehen sein, nicht die Vorderachse 18, sondern die Hinterachse 22 als Pendelachse auszugestalten. Damit ist im Bereich der Vorderachse 18 mehr Platz zum Durchführen der Kardanwelle 36 zur Getriebeeinheit 26.

In weiteren Ausführungsalternativen ist ein hydrostatischer Antrieb vorgesehen, der eine Hydraulikpumpe und einen Hydraulikmotor aufweist. Der Hydraulikmotor ist an der Getriebeeinheit 26 angebracht. Die Hydraulikpumpe ist entweder baulich mit der Verbrennungsmotoreinheit 28 oder mit dem Hydraulikmotor verbunden. Im erstgenannten Fall sind statt der Kardanwelle 36 lediglich geeignete Hydraulikschläuche zur Verbindung zwischen dem vorderen und dem mittleren Fahrzeugteil erforderlich. In zweitgenannten Fall verläuft die Kardanwelle 36 von der Verbrennungsmotoreinheit 28 zur Hydraulikpumpe.

Wenn der hydrostatische Antrieb einen genügend großen Einstellbereich der Fahrgeschwindigkeit zuläßt, kann in weiteren Ausführungsalternativen die Getriebeeinheit 26 vollständig durch den Hydraulikmotor ersetzt werden. Ein mechanisches Schaltgetriebe ist dann nicht mehr erforderlich. In diesem Fall erfüllt der Hydraulikmotor die Funktion der Getriebeeinheit 26.

## Patentansprüche

1. Trägerfahrzeug, insbesondere für die Landwirtschaft, mit
- einer Vorder- und einer Hinterachse (18, 22) mit Vorder- und Hinterrädern (20, 20', 24, 24'),
- einem sich im Bereich der Vorder- und der Hinterachse (18, 22) verjüngenden Rahmen (10), und
- einer zumindest überwiegend vor dem vordersten Punkt (VV) der Vorderräder (20, 20') angeordneten Verbrennungsmotoreinheit (28),
**gekennzeichnet durch**
- eine zwischen der Vorder- und der Hinterachse (18, 22) angeordnete Getriebeeinheit (26), und
- eine vor der Vorderachse (18) und zumindest teilweise über der Verbrennungsmotoreinheit (28) angeordnete Fahrerkabine (42), wobei
- der Rahmen (10) im Bereich der Vorder- und der Hinterräder (20, 20', 24, 24') auf eine Breite zusammengezogen ist, die kleiner als die Breite eines Vorder- oder Hinterrades (20, 20', 24, 24') ist.

2. Trägerfahrzeug nach Anspruch 1,
**dadurch gekennzeichnet, daß** ein Schwungradgehäuse (32) der Verbrennungsmotoreinheit (28) vor dem vordersten Punkt (VV) der Vorderräder (20, 20') oder ungefähr gleichauf mit diesem Punkt angeordnet ist.

3. Trägerfahrzeug nach Anspruch 1 oder Anspruch 2,
**dadurch gekennzeichnet, daß** die Getriebeeinheit (26) vor dem vordersten Punkt (VH) der Hinterräder (24, 24') und hinter dem hintersten Punkt (HV) der Vorderräder (20, 20') angeordnet ist, insbesondere dergestalt, daß die Getriebeeinheit (26) ungefähr in der Mitte zwischen der Vorder- und der Hinterachse (18, 22) und/oder ungefähr in der Mitte der Fahrzeugbreite angeordnet ist.

4. Trägerfahrzeug nach einem der Ansprüche 1 bis 3,
**dadurch gekennzeichnet, daß** die Reifen der Vorder- und der Hinterräder (20, 20', 24, 24') im wesentlichen gleiche Abmessungen aufweisen, und/oder daß die Vorder- und/oder die Hinterräder (20, 20', 24, 24') Breitreifen aufweisen, und/oder daß die Reifen der Vorder- und/oder der Hinterräder (20, 20', 24, 24') eine Breite von 0,8 m bis 1,2 m und/oder einen Durchmesser von 1,5 m bis 2,0 m aufweisen.

5. Trägerfahrzeug nach einem der Ansprüche 1 bis 4,
**dadurch gekennzeichnet, daß** der Rahmen (10) ein Hohlprofilrahmen ist, insbesondere dergestalt, daß eine zwischen der Verbrennungsmotoreinheit (28) und der Getriebeeinheit (26) verlaufende Kardanwelle (36) zumindest teilweise durch den Hohlprofilrahmen geführt ist.

6. Trägerfahrzeug nach einem der Ansprüche 1 bis 5,
**dadurch gekennzeichnet, daß** das Fahrzeug hydrostatisch angetrieben ist und ein Hydraulikmotor zwischen der Vorder- und der Hinterachse (18, 22) statt der in Anspruch 1 genannten Getriebeeinheit (26) oder zusätzlich zu dieser Getriebeeinheit (26) vorgesehen ist.

7. Trägerfahrzeug nach Anspruch 6,
**dadurch gekennzeichnet, daß** eine Hydraulikpumpe an der Verbrennungsmotoreinheit (28) oder an dem Hydraulikmotor angeordnet ist.

8. Trägerfahrzeug nach einem der Ansprüche 1 bis 7,
**dadurch gekennzeichnet, daß** an dem Rahmen (10) ein Schnellwechselsystem zum Anbringen von Aufbauten vorgesehen ist, und/oder daß an einem hinteren Abschnitt (16) des Rahmens (10) eine Anhängevorrichtung vorgesehen ist, insbesondere dergestalt, daß die Anhängevorrichtung als Dreipunktgestänge-Anhängevorrichtung ausgestaltet ist, die ein Verschwenken des Dreipunktgestänges um eine senkrechte Achse zuläßt.

9. Trägerfahrzeug nach einem der Ansprüche 1 bis 8,
**dadurch gekennzeichnet, daß** eine hydraulische Lenkung der Vorder- und der Hinterräder (20, 20', 24, 24') vorgesehen ist, bei der eine elektronische Lenksteuerung den Lenkwinkel der Hinterräder (24, 24') in Abhängigkeit von dem Lenkwinkel der Vorderräder (20, 20') bestimmt, insbesondere dergestalt, daß die elektronische Lenksteuerung zumindest auch eine Hundegang-Betriebsweisebereitstellt.

10. Trägerfahrzeug nach Anspruch 9,
**dadurch gekennzeichnet, daß** die Vorder- und/oder die Hinterachse (18, 22) eine Pendelachse ist.

## Claims

1. Carrier vehicle, in particular for agriculture, having
- a front and a rear axle (18, 22) having front and rear wheels (20, 20', 24, 24'),
- a frame (10) tapering in the region of the front and the rear axle (18, 22), and
- having an internal combustion engine unit (28) arranged at least predominantly in front of the frontmost point (VV) of the front wheels (20, 20'), **characterized by**
- a gear unit (26) arranged between the front and the rear axle (18, 22), and
- a driver's cab (42) arranged in front of the front axle (18) and at least partially above the internal combustion engine unit (28),
- the frame (10) being contracted in the region of the front and the rear wheels (20, 20', 24, 24') to a width which is smaller than the width of a front or rear wheel (20, 20', 24, 24').

2. Carrier vehicle according to Claim 1,
**characterized in that** a flywheel housing (32) of the internal combustion engine unit (28) is arranged in front of the frontmost point (VV) of the front wheels (20, 20') or approximately level with this point.

3. Carrier vehicle according to Claim 1 or Claim 2,
**characterized in that** the gear unit (26) is arranged in front of the frontmost point (VH) of the rear wheels (24, 24') and behind the rearmost point (HV) of the front wheels (20, 20'), in particular in such a manner that the gear unit (26) is arranged approximately in the centre between the front and the rear axle (18, 22) and/or approximately in the centre of the vehicle width.

4. Carrier vehicle according to one of Claims 1 to 3, **characterized in that** the tyres of the front and the rear wheels (20, 20', 24, 24') have essentially the same dimensions, and/or **in that** the front and/or the rear wheels (20, 20', 24, 24') have wide tyres, and/or **in that** the tyres of the front and/or the rear wheels (20, 20', 24, 24') have a width of 0.8 m to 1.2 m and/or a diameter of 1.5 m to 2.0 m.

5. Carrier vehicle according to one of Claims 1 to 4, **characterized in that** the frame (10) is a hollow profile frame, in particular to such an extent that at least part of a propeller shaft (36) running between the internal combustion engine unit (28) and the gear unit (26) is guided through the hollow profile frame.

6. Carrier vehicle according to one of Claims 1 to 5, **characterized in that** the vehicle is driven hydrostatically, and a hydraulic motor between the front and the rear axle (18, 22) is provided instead of the gear unit (26) mentioned in Claim 1 or in addition to this gear unit (26).

7. Carrier vehicle according to Claim 6,
**characterized in that** a hydraulic pump is arranged on the internal combustion engine unit (28) or on the hydraulic motor.

8. Carrier vehicle according to one of Claims 1 to 7, **characterized in that** a quick change system for the attachment of superstructures is provided on the frame (10), and/or **in that** a towing device is provided on a rear section (16) of the frame (10), in particular to such an extent that the towing device is designed as a three-point linkage towing device which permits the three-point linkage to pivot about a vertical axis.

9. Carrier vehicle according to one of Claims 1 to 8, **characterized in that** a hydraulic steering of the front and of the rear wheels (20, 20', 24, 24') is provided, in which an electronic steering control determines the steering angle of the rear wheels (24, 24') as a function of the steering angle of the front wheels (20, 20'), in particular to such an extent that the electronic steering control at least also provides a crab-steering operating mode.

10. Carrier vehicle according to Claim 9,
**characterized in that** the front and/or the rear axle (18, 22) is/are a swinging axle.

## Revendications

1. Véhicule porteur, en particulier pour l'agriculture, comportant
- un essieu avant et un essieu arrière (18, 22) avec des roues avant et des roues arrière (20, 20', 24, 24'),
- un châssis (10) qui est plus étroit dans la zone des essieux avant et arrière (18, 22), et
- une unité formant moteur à combustion interne (28) qui est disposée au moins en grande partie devant le point avant (VV) des roues avant (20, 20'),
**caractérisé par**
- une unité de transmission (26) qui est disposée entre les essieux avant et arrière (18, 22), et
- une cabine de conducteur (42) qui est disposée devant l'essieu avant (18) et au moins en partie au-dessus de l'unité formant moteur à combustion interne (28),
- le châssis (10) étant resserré, dans la zone des roues avant et arrière (20, 20', 24, 24'), jusqu'à une largeur qui est inférieure à la largeur d'une roue avant ou arrière (20, 20', 24, 24').

2. Véhicule porteur selon la revendication 1, **caractérisé en ce qu'**un carter-volant (32) de l'unité formant moteur à combustion interne (28) est disposé devant le point avant (VV) des roues avant (20, 20') ou à peu près à la hauteur de ce point.

3. Véhicule porteur selon la revendication 1 ou 2, **caractérisé en ce que** l'unité de transmission (26) est disposée devant le point avant (VH) des roues arrière (24, 24') et derrière le point arrière (HV) des roues avant (20, 20'), en particulier de manière à se trouver à peu près à mi-distance entre les essieux avant et arrière (18, 22) et/ou à peu près au milieu de la largeur du véhicule.

4. Véhicule porteur selon l'une des revendications 1 à 3, **caractérisé en ce que** les pneus des roues avant et arrière (20, 20', 24, 24') présentent globalement les mêmes dimensions, et/ou **en ce que** les roues avant et/ou arrière (20, 20', 24, 24') ont des pneus larges, et/ou **en ce que** les pneus des roues avant et/ou arrière (20, 20', 24, 24') ont une largeur de 0,8 m à 1,2 m et/ou un diamètre de 1,5 m à 2,0 m.

5. Véhicule porteur selon l'une des revendications 1 à 4, **caractérisé en ce que** le châssis (10) est constitué par un châssis profilé creux, en particulier de telle sorte qu'un arbre cardan (36) qui s'étend entre l'unité formant moteur à combustion (28) et l'unité de transmission (26) traverse au moins partiellement le châssis profilé creux.

6. Véhicule porteur selon l'une des revendications 1 à 5, **caractérisé en ce qu'**il est entraîné par une commande hydrostatique, et un moteur hydraulique est prévu entre les essieux avant et arrière (18, 22) à la place de l'unité de transmission (26) spécifiée dans la revendication 1 ou en plus de cette unité de transmission (26).

7. Véhicule porteur selon la revendication 6, **caractérisé en ce qu'**une pompe hydraulique est disposée sur l'unité formant moteur à combustion interne (28) ou sur le moteur hydraulique.

8. Véhicule porteur selon l'une des revendications 1 à 7, **caractérisé en ce qu'**il est prévu sur le châssis (10) un système à échange rapide pour le montage d'une superstructure, et/ou **en ce qu'**il est prévu sur une section arrière (16) du châssis (10) un dispositif d'attelage, en particulier sous la forme d'un dispositif d'attelage à timonerie à trois points qui autorise un pivotement de la timonerie autour d'un axe vertical.

9. Véhicule porteur selon l'une des revendications 1 à 8, **caractérisé en ce qu'**il est prévu une direction hydraulique des roues avant et arrière (20, 20', 24, 24'), avec laquelle une commande de direction électronique définit l'angle de braquage des roues arrière (24, 24') en fonction de l'angle de braquage des roues avant (20, 20'), en particulier de telle sorte que ladite commande de direction électronique offre au moins un mode de marche en crabe.

10. Véhicule porteur selon la revendication 9, **caractérisé en ce que** les essieux avant et/ou arrière (18, 22) sont des essieux brisés.
